# EUROPÄISCHE PATENTSCHRIFT

(11) **EP 2 427 817 B1**
(45) Veröffentlichungstag und Bekanntmachung des Hinweises auf die Patenterteilung: **16.12.2015**
(21) Anmeldenummer: 10716845.2
(22) Anmeldetag: 05.05.2010
(51) Int. Cl.: G06F 3/06, G06F 21/00

(54) **VERFAHREN ZUM ZUGRIFF AUF EINEN TRAGBAREN SPEICHERDATENTRÄGER MIT ZUSATZMODUL UND TRAGBARER SPEICHERDATENTRÄGER**
METHOD FOR ACCESSING A PORTABLE DATA STORAGE MEDIUM WITH AUXILIARY MODULE AND PORTABLE DATA STORAGE MEDIUM
PROCÉDÉ D'ACCÈS À UN SUPPORT DE DONNÉES MÉMOIRE À MODULE SUPPLÉMENTAIRE ET SUPPORT DE DONNÉES MÉMOIRE

(30) Priorität: 05.05.2009 DE 102009019982
(43) Veröffentlichungstag der Anmeldung: 14.03.2012
(73) Patentinhaber: Giesecke & Devrient GmbH, 81677 München (DE)
(72) Erfinder: MARTINI, Ullrich, 81669 München (DE)
(86) Internationale Anmeldenummer: PCT/EP2010/056058
(87) Internationale Veröffentlichungsnummer: WO 2010/128059

(56) Entgegenhaltungen:
- DE-A1-102007 050 463
- US-A1- 2005 086 421
- US-A1- 2005 257 017

## Beschreibung

Die Erfindung betrifft ein Verfahren zum Zugriff auf einen tragbaren Speicherdatenträger und einen Controller zur Verwaltung eines standardisierten Speicherelements und mit einem Zusatzmodul. Die Erfindung betrifft ferner einen tragbaren Speicherdatenträger sowie ein Terminal. Insbesondere betrifft die Erfindung eine Massenspeicherkarte mit einem Smartcard-IC.

Portable Massenspeicher mit immer größer werdender Speicherkapazität werden zunehmend häufiger in den verschiedensten elektronischen Geräten verwendet. Auf ihnen können digitale Inhalte oder Text-, Bilder-, Audio- oder Videodaten oder ähnliches gespeichert werden. Portable Massenspeicher weisen dabei den Vorteil auf, dass sie von verschiedenen elektronischen Geräten, wie PCs, PDAs, Smartphones, Digitalkameras, Audiogeräten usw. gelesen und gegebenenfalls beschrieben werden können. Die portablen Massenspeicher erlauben so ein einfaches Sichern und Transportieren digitaler Inhalte.

Für portable Massenspeicher wurden verschiedene Standards entwickelt, die unterschiedliche Verbreitung finden. Verbreitete Massenspeicher-Typen sind Multimedia Cards (MMC), Secure Digital Memory Cards (SD-Cards), Micro SD-Karten, Memory Sticks (USB-Sticks), aber auch CDs, DVDs usw.

Es ist auch bekannt, tragbare Datenträger der vorgenannten Art zusätzlich mit Zusatzinformationen, insbesondere Sicherheitsfunktionen, auszustatten, um beispielsweise digitale Inhalte des Speichers vor unberechtigtem Zugriff zu schützen. In diesem Zusammenhang ist aus der WO 2008/058741 A2 der Anmelderin ein Steuerungssystem für Zugriffe auf einen tragbaren Speicherdatenträger bekannt, welches neben einem sicheren Smartcard-Chip auch einen nicht besonders gesicherten, üblichen Massenspeicher, insbesondere einen Flash-Speicher, aufweist. Durch das Zusammenwirken einer Leitinformation mit einem auf der Karte angeordneten, zur Auswertung der Leitinformation eingerichteten Controller ist ein Mechanismus geschaffen, der es dem Controller erlaubt, auf dem tragbaren Speicherdatenträger eingehende Daten entweder an den Flash-Speicher oder an den Smartcard-Chip zu leiten. Die Leitinformation beinhaltet einen für den Smartcard-Chip eindeutigen Bezeichner, der vorzugsweise in Form einer Zeichenkette von vorgegebener Länge vorliegt. Die Leitinformation kann darüber hinaus weitere Informationen über Absender und Bestimmungseinheit von Anwendungsdaten enthalten. Die Zugriffe auf das Speicherelement erfolgen mittels Standardbefehlen des verwendeten Betriebssystems, insbesondere unter Verwendung gängiger Schreib- und Lesebefehle, Suchkommandos, Identifizierungskommandos usw. Dabei kann eine Rückübermittlung von Antworten des Zusatzmoduls an das Terminal mit Hilfe einer temporären Arbeitsadresse im Speicherelement erfolgen, unter der die Antwort in dem Speicherdatenträger bereitgestellt wird. Durch das in dieser Druckschrift beschriebene Steuerungssystem kann wahlweise die Haupt- oder Zusatzfunktion des tragbaren Speicherdatenträgers angesprochen werden, ohne dass dazu jeweils spezielle Treiber entwickelt und eingerichtet werden müssen.

Im Zusammenhang mit dem Zugriff auf intelligente Speicherkarten aller Art, insbesondere SD-Karten, MMC-Karten, die zusätzlich einen Smartcard-Chip beinhalten, ist es aus der US 7,334,077 B2 bekannt, einen Erkennungsmechanismus auf den Speicherkarten einzurichten, der mit einer Flag-Sequenz zusammenwirkt, welche in übliche Zugriffskommandos eingefügt wird. Dies erlaubt die Einrichtung neuer Kommandos und Sonderoperationen auf dem Speicherdatenträger, ohne dazu umfangreiche Änderungen an den Treibern vornehmen zu müssen. Die Flag-Sequenz kann hierbei jede beliebige Folge von Daten sein und wird z.B. in das Datenfeld von Standardschreib- und Lesekommandos gesetzt. Die Flag-Sequenz kann darüber hinaus einen Indikator für die Ausführung einer Sonderoperation enthalten. Erkennt der Erkennungsmechanismus eine solche Flag-Sequenz in einem Zugriffskommando, so führt er nicht das Zugriffskommando aus, sondern nimmt die Kommandoausführung gemäß einer auf der Speicherkarte hinterlegten Funktionsweise vor und führt insbesondere eine Sonderoperation aus.

Aus der WO 2007/076214 A2 ist ferner ein Kommunikationsverfahren zwischen einem Terminal (Host) und einem Datenträger über einen Leser/ Adapter bekannt, wenn das Terminal und der Datenträger unterschiedliche Übertragungsprotokolle nutzen. Bei diesem Kommunikationsverfahren werden in dem Terminal direkt Kommandos entsprechend dem lokalen Protokoll der Karte gebildet und in ein Datenfeld von Terminal-typischen Kommandos eingebettet. In dem Datenträger werden die eingebetteten Kommandos extrahiert und ausgeführt. Um der Karte das Vorhandensein eingebetteter Kommandos zu signalisieren, wird ihnen eine Signatur vorangestellt.

Es ist daher Aufgabe der vorliegenden Erfindung, ein Verfahren zur Kommunikation zwischen einem Terminal und einem tragbaren Datenträger mit einer Haupt- und wenigstens einer Zusatzfunktion anzugeben, das es erlaubt, wahlweise die Haupt- oder die Zusatzfunktion des tragbaren Datenträgers anzusprechen, ohne dass dazu jeweils spezielle Treiber entwickelt und eingerichtet werden müssen. Es sollen hierbei Zugriffe auf das Speichercherelement des Speicherdatenträgers vornehmbar sein, ohne dass das Terminal die Zugriffe bemerkt oder in dem Terminal eine Spur des Zugriffs hinterlassen wird. Es ist weiter Aufgabe der Erfindung, einen zur Ausführung des Verfahrens geeigneten tragbaren Speicherdatenträger sowie ein entsprechendes Terminal anzugeben.

Die Aufgabe wird gelöst durch ein Verfahren mit den Merkmalen des Patentanspruches 1. Vorteilhafte Ausgestaltungen ergeben sich aus den abhängigen Patentansprüchen.

Die Erfindung schafft ein Verfahren zum Zugriff auf einen tragbaren Speicherdatenträger mit einem Controller zur Verwaltung eines standardisierten Speicherelements und mit einem Zusatzmodul. Bei dem Verfahren wird in einem ersten Übertragungsprotokoll ein Datenblock an den Speicherdatenträger übertragen, wobei der Datenblock eine Leitinformation und Anwendungsdaten umfasst, und wobei die Leitinformation einen Bezeichner enthält, der von dem Controller erkannt werden kann. Es wird weiter bestimmt, ob ein auf dem Speicherdatenträger eingegangener Datenblock eine Leitinformation enthält. Erfindungsgemäß wird der Datenblock an einen für ein Terminal verdeckten Speicherbereich des Speicherelements weitergeleitet, wenn der Datenblock eine Leitinformation und die Leitinformation neben dem darin enthaltenen Bezeichner zumindest einen weiteren, vorgegebenen und den Zugriff auf den verdeckten Speicherbereich indizierenden Parameter umfasst.

Die Erfindung schafft damit eine Möglichkeit, das Speicherelement mit Daten zu beschreiben, wobei durch einen Kontext festgelegt ist, ob das Beschreiben erlaubt ist oder nicht. Hierdurch wird das Schreiben in Bereichen des Speicherelements ermöglicht, in denen es üblicherweise nicht erlaubt wäre. Dieser Bereich des Speicherelements wird als verdeckter Speicherbereich bezeichnet. Hieraus ergibt sich, dass ein Teil des Speicherelements schreibgeschützt ist. Dies entspricht der Emulation einer CD-ROM. Durch das Senden der Leitinformation mit dem weiteren, vorgegebenen Parameter kann dieser Schreibschutz vorübergehend und kontrolliert umgangen werden, um neue Daten in diesen verdeckten Speicherbereich (CD-ROM-Emulation) einzubringen.

Ein Vorteil des erfindungsgemäßen Verfahrens besteht darin, dass ein Zugriff auf die Daten des Speicherelements in dem Speicherdatenträger vornehmbar ist, ohne dass das Terminal die Zugriffe bemerkt oder in dem Terminal eine Spur des Zugriffs hinterlassen wird. Hierdurch wird ein erhöhtes Maß an Sicherheit geschaffen. Die in dem verdeckten Speicherbereich enthaltenen Daten sind lediglich dann sichtbar, wenn die Daten korrekt interpretiert werden können. Hierdurch können Fehlermeldungen aufgrund eines fehlenden Zugriffsrechts vermieden werden.

Insbesondere ist vorgesehen, dass auf dem Terminal eine privilegierte Anwendung ausgeführt wird, welche auf den verdeckten Speicherbereich zugreifen kann. Es ist in diesem Zusammenhang besonders bevorzugt, wenn nur die privilegierte Anwendung auf den verdeckten Speicherbereich zugreifen kann. Insbesondere soll kein Zugriff durch das Betriebssystem des Terminals auf den verdeckten Speicherbereich ermöglicht sein. Hierdurch kann die Sicherheit bei einem Zugriff auf den tragbaren Speicherdatenträger weiter verbessert werden.

Ein Zugriff der privilegierten Anwendung auf den verdeckten Speicherbereich erfolgt zweckmäßigerweise ohne administrative Rechte für den tragbaren Speicherdatenträger, wodurch Fehlermeldungen aufgrund fehlender Rechte des Betriebssystems vermieden werden können.

Das Speicherelement des tragbaren Speicherdatenträgers weist eine tatsächliche Gesamtgröße auf, wobei von dem tragbaren Speicherdatenträger an das Terminal ein die Größe des Speicherelements repräsentierender Wert als Gesamtgröße übertragen wird, der sich aus der Differenz der tatsächlichen Gesamtgröße und der Größe des verdeckten Speicherbereichs ergibt. Hierdurch wird die Existenz des verdeckten Speicherbereichs ohne Vorliegen eines speziellen Kontexts "verschwiegen".

Gemäß einer weiteren Ausgestaltung ist das Terminal mit einer Programmierschnittstelle versehen, welche bei einer Anfrage der privilegierten Applikation auf den verdeckten Speicherbereich die Anfrage in einen Datenblock umsetzt und der Leitinformation den weiteren, vorgegebenen Parameter hinzufügt.

Als Reaktion hierauf werden bei einem Zugriff auf den verdeckten Speicherbereich in einer Antwort dessen Dateiverzeichnis (auch Speicherverzeichnis genannt) und optimal die darin enthaltenen Daten an das Terminal übertragen. Genauer werden diese Informationen an die privilegierte Anwendung übertragen.

Um die Sicherheit des Zugriffs auf in dem verdeckten Speicher abgelegte Daten weiter zu erhöhen, kann ferner vorgesehen sein, die in dem verdeckten Speicherbereich gespeicherten Daten verschlüsselt zu speichern.

Es kann weiterhin vorgesehen sein, dass das erste Übertragungsprotokoll auf das Speicherelement abgestimmt ist. Alternativ kann vorgesehen sein, dass Kommandos, welche nicht in einem zweiten Übertragungsprotokoll des Speicherelements an diesen übertragen werden können, in einem Datenblock in dem ersten Übertragungsprotokoll mit der Leitinformation an den tragbaren Speicherdatenträger übertragen werden. Diese Ausgestaltungsvariante erlaubt es, dass Kommandos, welche nicht in dem Übertragungsprotokoll des Speicherelements an den Controller des Speicherdatenträgers übertragen werden können, in einem durch den Controller interpretierbaren Datenblock zu "verpacken", um damit innerhalb des ersten Übertragungsprotokolls das Kommando in dem zweiten Übertragungsprotokoll zu tunneln.

Insbesondere ist dazu die Leitinformation zur Indikation des Kommandos in dem zweiten Übertragungsprotokoll um einen zweiten, vorgegebenen Parameter ergänzt. Hierdurch können Kommandos des zweiten Übertragungsprotokolls ohne zusätzliche Hardware, Treiber oder administrative Rechte von dem Terminal an den Controller des Speicherdatenträgers übertragen, von dem Controller als Kommando in einem zweiten Übertragungsprotokoll erkannt und extrahiert werden. Das Kommando kann dann durch den Controller dem Speicherelement zur Verfügung gestellt werden.

Die Erfindung schafft ferner einen tragbaren Speicherdatenträger mit einem Controller zur Verwaltung eines standardisierten Speicherelements und mit einem Zusatzmodul. Der Speicherdatenträger ist dazu ausgebildet, in einem ersten Übertragungsprotokoll einen Datenblock von einem Terminal zu empfangen, wobei der Datenblock eine Leitinformation und Anwendungsdaten umfasst, und wobei die Leitinformation einen von dem Controller erkennbaren Bezeichner enthält. Der Speicherdatenträger ist weiter dazu ausgebildet, zu bestimmen, ob ein auf dem Speicherdatenträger eingegangener Datenblock eine Leitinformation enthält. Erfindungsgemäß ist der Speicherdatenträger dazu ausgebildet, den Datenblock an einen Speicherbereich des Speicherbereichs weiterzuleiten, der für ein Terminal verdeckt ist, wenn der Datenblock eine Leitinformation und die Leitinformation neben dem darin enthaltenen Bezeichner zumindest einen weiteren, vorgegebenen Parameter umfasst, welcher den Zugriff auf den verdeckten Speicherbereich indiziert.

Schließlich schafft die Erfindung ein Terminal, das für den Zugriff über eine Standardschnittstelle auf einen tragbaren Speicherdatenträger der vorstehend genannten Art ausgebildet ist. Das Terminal ist dazu eingerichtet, zu für das Zusatzmodul bestimmten Anwendungsdaten eine Leitinformation mit einem weiteren, vorgegebenen und den Zugriff auf den verdeckten Speicherbereich indizierenden Parameter zu erzeugen.

Der erfindungsgemäße tragbare Speicherdatenträger sowie das erfindungsgemäße Terminal weisen die gleichen Vorteile auf, wie diese oben stehend in Verbindung mit dem erfindungsgemäßen Verfahren beschrieben wurden.

Schließlich schafft die Erfindung ein System, das einen tragbaren Speicherdatenträger der beschriebenen Art sowie ein Terminal der oben beschriebenen Art umfasst.

Von der Erfindung ist ferner ein Computerprogrammprodukt für den Zugriff auf einen Speicherdatenträger mit einem Zusatzmodul umfasst, das direkt in ein Speichersystem eines Terminals geladen werden kann und Softwarecodeabschnitte umfasst, mit denen die Verfahrensschritte des oben beschriebenen Verfahrens ausgeführt werden, wenn das Computerprogrammprodukt auf einem Prozessor des Terminals ausgeführt wird.

Die Erfindung wird nachfolgend näher anhand von Ausführungsbeispielen erläutert. Es zeigen:
- Fig. 1: eine schematische Darstellung eines erfindungsgemäßen Systems, das ein Terminal und einen tragbaren Speicherdatenträger umfasst,
- Fig. 2: eine schematische Darstellung einer Implementierung des erfindungsgemäßen Verfahrens in einer ersten Ausgestaltungsvariante,
- Fig. 3: eine schematische Darstellung einer Implementierung des erfindungsgemäßen Verfahrens in einer zweiten Ausgestaltungsvariante und,
- Fig. 4: eine schematische Darstellung einer Implementierung des erfindungsgemäßen Verfahrens in einer weiteren Ausgestaltungsvariante.

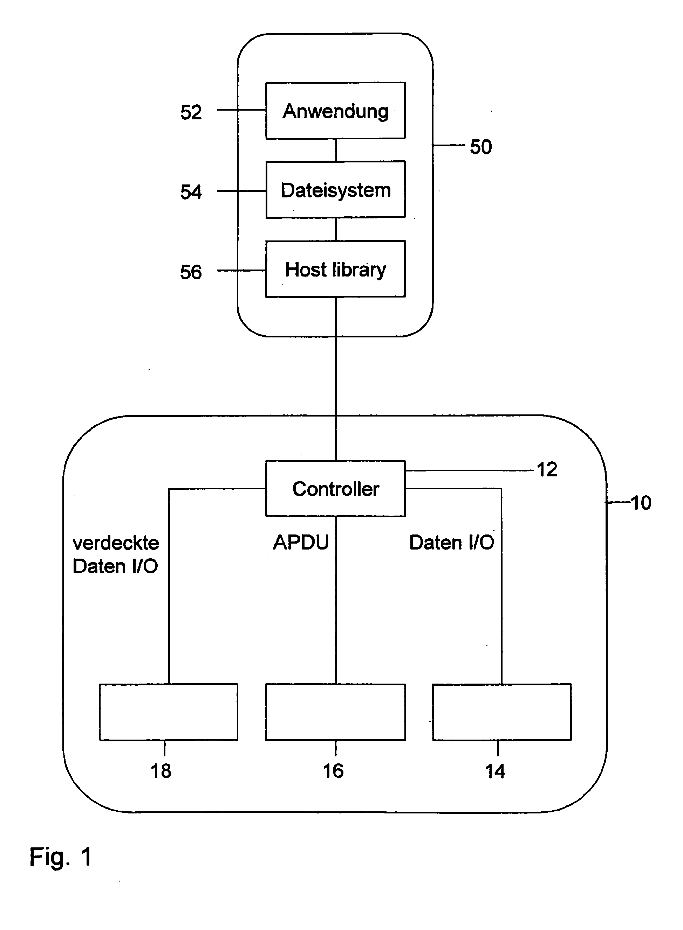

Fig.1 zeigt ein System bestehend aus einem Terminal 50 und einem tragbaren Speicherdatenträger 10 mit ihren jeweils wesentlichen Komponenten. Das erfindungsgemäße System basiert auf dem in der WO 2008/058741 A2 beschriebenen System, dessen Inhalt durch Bezugnahme in diese Anmeldung aufgenommen ist.

Unter einem "Terminal" wird nachfolgend eine computerbasierte Einrichtung verstanden, die einem Nutzer Soft- und Hardwareressourcen bereitstellt, um unterschiedliche durch eine oder mehrere Anwendungen 52 bestimmte Datenverarbeitungsaufgaben auszuführen. Terminals können elektronische Geräte oder Endgeräte aller Art sein, die über eine Schnittstelle für Speicherdatenträger (nicht dargestellt) verfügen, wie beispielsweise ein Personalcomputer (PC), ein Host für eine Mehrzahl von Nutzern oder insbesondere auch ein mobiles Endgerät, etwa ein Handy oder ein PDA, eine Digitalkamera, ein digitales Audiosystem oder ähnliches.

Das Terminal 50 basiert auf einem üblichen Computer, dessen typische Bestandteile, soweit diese nicht für die Beschreibung der Erfindung erforderlich sind, auch nicht weiter dargestellt sind. Es besitzt ein Betriebssystem zur Ausführung aller grundlegenden Terminalfunktionen, ein dem Betriebsystem zugeordnetes Dateisystem 54, einen Treiber zur Steuerung eines Datenaustausches mit einem externen Gerät, eine elektromechanische Schnittstelle zur Herstellung einer physikalischen Datenaustauschverbindung mit einem externen Gerät sowie eine Terminal Library 56 (sog. Host Library). Das Terminal dient zur Ausführung verschiedener Anwendungen 52, die in Softwareform in einem jeweiligen Speicher des Terminals 50 hinterlegt sind.

Unter einem tragbaren "Speicherdatenträger" wird im Folgenden grundsätzlich eine computerbasierte Einrichtung verstanden, die in einem tragbaren, geometrisch kleinen Gehäuse untergebracht ist, so dass sie von einem Nutzer bequem mitgeführt werden kann, keine oder eine nur reduziert ausgebildete Mensch-Maschine-Schnittstelle aufweist, und die einem Nutzer, entsprechend ihrer Baugröße, beschränkte Soft- und Hardwareressourcen zur Verfügung stellt, um einen begrenzten Satz von Datenverarbeitungsaufgaben ausführen zu können. Typische Bauformen für einen tragbaren Speicherdatenträger sind eine Smartcard, ein USB-Token, eine Multimedia Card (MMC), eine Secure Digital Memory Card (SD-Card) oder ein Memory Stick.

Der tragbare Speicherdatenträger 10 weist erfindungsgemäß eine Haupt- und eine oder mehrere Zusatzfunktionen auf. Die Hauptfunktion besteht in der Fähigkeit zur Verwaltung eines Speicherelements 14 unter Verwendung eines auf das Speicherelement 14 abgestimmten Übertragungsprotokolls. Die Hauptfunktion legt das Übertragungsprotokoll fest, gemäß dem das Terminal 50 mit dem tragbaren Speicherdatenträger 10 kommuniziert. Die Implementierung der Hauptfunktion kann auf die Einrichtung zur Ausführung des Übertragungsprotokolls beschränkt sein. Die eigentliche Funktion, d.h. insbesondere eine Speicherfunktionalität, muss nicht notwendigerweise tatsächlich implementiert sein. Die Zusatzfunktion kann z.B. in einer Signaturfunktion oder in einer Authentisierungsfunktion bestehen. Sie wird von einem Zusatzmodul 16 bereitgestellt, das unabhängig von der Hauptfunktion arbeitet. Das Zusatzmodul 16 kann dabei als reine Softwarekomponente, als Hardwarekomponente oder als Kombination von beiden realisiert sein.

Hauptkomponenten des tragbaren Speicherdatenträgers 10 sind ein Controller 12 zur Steuerung der Speicherfunktion und des Datenaustausches mit dem Terminal 50, ein Speichersystem bestehend aus einem wiederbeschreibbaren Speicherelement 14 zur nicht-flüchtigen Aufnahme von Daten und einem verdeckten Speicherbereich 18 für den ausschließlichen Zugriff durch eine auf dem Terminal 50 laufende privilegierte Anwendung. Der verdeckte Speicherbereich 18 kann durch einen Teil des Speicherelements 14 gebildet sein, wobei die Größe und der Inhalt des verdeckten Speicherbereichs durch das Terminal 50 prinzipiell nicht einsehbar und/oder zugänglich ist. Darüber hinaus weist der tragbare Speicherdatenträger 10 das Zusatzmodul 16 zur Ausführung einer oder mehrerer Zusatzfunktionen sowie eine zu der Schnittstelle des Terminals 50 korrespondierende Gegenschnittstelle zur Herstellung einer physischen Verbindung zum Datenaustausch mit dem Terminal 50 auf.

Die Schnittstelle zwischen dem Terminal 50 und dem tragbaren Speicherdatenträger 10 ist typischerweise vom kontaktbehafteten Typ, kann aber auch als kontaktlos arbeitende Schnittstelle ausgebildet sein. Sie kann beispielsweise eine universelle Standardschnittstelle, etwa eine USB-Schnittstelle oder eine auf einen bestimmten Typ von Speichervorrichtung 14 abgestimmte Schnittstelle, etwa eine Multimedia Card (MMC)-, Secure Digital Memory Card (SD-Card)- oder Memory Stick-Schnittstelle sein. Zur Durchführung eines Datenaustausches über die Schnittstelle wird ein geeignetes, auf das Speicherelement 14 abgestimmtes Übertragungsprotokoll eingesetzt, das in der Regel deutlich verschieden ist von einem zur Kommunikation mit dem Zusatzmodul 16 geeigneten, spezifischen Protokoll.

Das Speicherelement 14 braucht nicht integraler Bestandteil des Speicherdatenträgers 10 sein, sondern kann als davon unterschiedliches Element ausgebildet sein. So kann der Speicherdatenträger 10 beispielsweise der Funktion nach einen Konverter darstellen, über den das Speicherelement 14 mit dem Terminal 50 kommunikativ in Austausch bringbar ist. Beispielsweise kann der Speicherdatenträger 10 ein USB/SD- oder USB/MMC-Konverter usw. sein, während das Speicherelement 14 eine Secure Digital Memory Card (SD-Card) oder eine Multimedia Card (MMC) usw. ist. In diesem Zusammenhang ist zu berücksichtigen, dass der verdeckte Speicherbereich 18 entgegen der schematischen Zeichnung physikalisch nicht in dem tragbaren Speicherdatenträger 10, sondern in dem Speicherelement 14 verwirklicht ist.

Das Betriebssystem des Terminals 50 ist ein für computerbasierte Endgeräte verbreitetes Betriebssystem. Es führt eine oder mehrere Anwendungen 52 aus, die in Form von Software in dem Terminal 50 gespeichert sind. Die Anwendung oder Anwendungen 52 realisieren Nutzfunktionen, die Zugriffe auf das Speicherelement 14 des Speicherdatenträgers 10 umfassen können. Die Anwendung oder Anwendungen 52 können des Weiteren Zugriffe auf das Zusatzmodul 16 vorsehen. Bei ihrer Ausführung nutzen die Anwendung oder Anwendungen 52 vom Betriebssystem bereitgestellte System- oder Standardfunktionen, um z.B. auf ein Dateisystem und über dieses auf Dateien in dem Speicherdatenträger 10 zuzugreifen.

Zur Ausführung eines vom Betriebssystem des Terminals 50 übermittelten logischen Zugriffsbefehls auf das Speicherelement 14 wird ein Treiber benutzt. Dieser setzt transparente Zugriffsbefehle in für den Controller 12 des Speicherdatenträgers 10 interpretierbare Befehle um. Die Befehle beinhalten grundsätzlich eine Adresse des Speicherelementes 14 sowie eine Angabe, ob der Befehl ein Schreib- oder ein Lesebefehl ist. Die einem Befehl zugeordneten Daten werden in Datenleitungen übermittelt. Als Treiber wird typischerweise ein auf die Beschaffenheit der Schnittstelle zwischen Terminal 50 und Speicherdatenträger 10 sowie dem Typ des Speicherelements 14 abgestimmter Standardtreiber verwendet. Der Treiber ist beispielsweise ein üblicher Flashcard-Treiber, wenn das Speicherelement 14 vom Flashcard-Typ ist.

Der Controller 12 des Speicherdatenträgers 10 setzt die eingehenden Zugriffsbefehle in entsprechende Zugriffe auf das Speicherelement 14 um. Zur Vorbereitung der Zugriffsbefehle im Terminal 50 übermittelt der Controller dazu ein Speicherbelegungsverzeichnis, wobei dieses keine Information über den verdeckten Speicherbereich 18 enthält. Der Controller 12 fungiert des Weiteren gegenüber dem Zusatzmodul 16 als Schreib-/Lesegerät und kommuniziert mit diesem über ein spezifisches Protokoll (APDU). Mittels einer vorzugsweise als Programm eingerichteten Auswerteeinheit wertet er eingehende Datenblöcke daraufhin aus, ob sie für das Zusatzmodul 16 bestimmt sind. Sind Datenblöcke für das Zusatzmodul 16 bestimmt, leitet der Controller 12 die in den Datenblöcken enthaltenen Anwendungsdaten über eine zu diesem Zweck vorgesehene Umschalteinheit an das Zusatzmodul 16 weiter. Der Controller 12 steuert weiterhin den Datenaustausch in umgekehrter Richtung und übermittelt Antwortdaten des Zusatzmoduls 16 zurück an das Terminal 50 oder speichert diese zunächst solange, bis das Terminal 50 die Antwortdaten nachfragt. Des Weiteren dient er zum Zwischenspeichern von Antworten des Zusatzmoduls 16. Der Controller 12 überwacht ferner den Datenaustausch zum Terminal 50 und mit dem Zusatzmodül 16 auf formale Richtigkeit und Plausibilität. Beispielsweise prüft er, ob Schreib- und Lesezugriffe auf das Zusatzmodul 16 jeweils vollständig ausgeführt werden.

Das Zusatzmodul 16 ist typischerweise nach Art eines Chipkarten-ICs ausgeführt, d.h. es ist logisch und physisch besonders manipulationssicher, in seinen Ressourcen beschränkt und führt typischerweise eine gegen Angriffe sensible, sicherheitskritische Funktion aus, etwa die Erstellung einer Signatur über zugesandte Daten. Vorzugsweise ist das Zusatzmodul 16 eine separate Baueinheit und besitzt einen unabhängigen Controller. Denkbar ist auch, das Zusatzmodul 16 als funktional selbständigen Bestandteil des Controllers 12 oder zusammen mit diesem als gemeinsames Bauelement auszuführen. Zugriffe auf das Zusatzmodul 16 erfolgen unter Verwendung eines spezifischen Protokolls, das von dem Controller 12 realisiert wird.

Um einen Zugriff auf Daten des Speicherelements 14 in dem Speicherdatenträger 10 vornehmen zu können, ohne dass das Terminal 50 die Zugriffe bemerkt oder in dem Terminal eine Spur des Zugriffs hinterlassen wird, ist der verdeckte Speicherbereich 18 des Speicherelements 14 vorgesehen. Der Controller 12 gibt keine Information über das Vorhandensein des verdeckten Speicherbereichs 18, über die Größe des verdeckten Speicherbereichs 18 oder über die darin enthaltenen Daten Auskunft an das Terminal 50. Der Zugriff auf den verdeckten Speicherbereich 18 erfolgt nur über eine spezifische Programmierschnittstelle in dem Terminal 50. Eine privilegierte Anwendung 52 in dem Terminal 50 übersetzt Anfragen auf Daten in dem verdeckten Speicherbereich 18 in einen Datenblock, z.B. eine Blockadresse, der Programmierschnittstelle. Diese Blockadresse wird an den Controller 12 übertragen.

In dem Terminal 50 sind Programmierschnittstellen (API, Application Programable Interface) vorgesehen und für viele moderne Betriebssysteme standardisiert. Eine solche Programmierschnittstelle kann ähnlich der aus der Spezifikation POSIX bekannten Schnittstelle "stdio" ausgebildet sein, welche überwiegend in C verwendet wird. Ebenso kann sie ähnlich der Schnittstelle "IOstream" ausgebildet sein, welche hauptsächlich in C++ verwendet wird. Ähnliche Programmierschnittstellen existieren für Java oder .NET, wobei eine Implementierung für derartige Umgebungen auf nativen Programmierschnittstellen basiert, wie diese oben aufgeführt sind. Durch die Programmierschnittstelle empfangene Anfragen werden auf eine logische Blockadresse in dem verdeckten Speicherbereich gemapped. Es wird ein entsprechendes Ein-/Ausgabekommando (I/O-Kommando) erstellt, das z.B. ein standardisiertes I/O-Kommando, z.B. ein SCSI-Kommando, wie es in USB-Massenspeichermedien verwendet wird ist, oder ein SD-Kommando sein kann. Das I/O-Kommando beinhaltet einen Header mit einer Information, daß es für das Speicherelement 14 bestimmt ist sowie ggf. zusätzliche Protokollinformationen. In den Nutzdaten ist, wenn das Kommando für den verdeckten Speicherbereich 18 bestimmt ist, eine Leitinformation enthalten. Vorzugsweise wird die Leitinformation durch den ersten Teil der Nutzdaten gebildet, indem diese einen bestimmten Inhalt haben.

Die Übertragung der Blockadresse erfolgt in einem ersten Datenprotokoll, welches auf das Speicherelement 14 oder den Speicherdatenträger 10 abgestimmt ist. Beispielsweise können hierzu USB-Mass-Storage-Kommandos verwendet werden. Die Datenblöcke zum Lesen und Schreiben von Daten in dem verdeckten Speicherbereich 18 werden mit einer Leitinformation versehen, welche neben einem darin enthaltenen Bezeichner für den Zugriff auf das Zusatzmodul 16 zumindest einen weiteren, vorgegebenen und den Zugriff auf den verdeckten Speicherbereich 18 indizierenden Parameter umfasst. Eine Host Library 56 des Terminals 50, welche auf eine Datei in dem verdeckten Speicherbereich 18 zugreifen möchte, erstellt hierzu den oben bezeichneten Datenblock.

Der Controller 12 übersetzt diese Kommandos in Lese- oder Schreibkommandos für den verdeckten Speicherbereich 18 des Speicherdatenträgers, wenn der Datenblock die Leitinformation und die Leitinformation neben dem darin enthaltenen Bezeichner zumindest den weiteren und den Zugriff auf den verdeckten Speicherbereich 18 indizierenden Parameter umfasst.

Dieses Vorgehen wird anhand von Fig.1 nochmals veranschaulicht. Das Terminal 50 ist beispielsweise über eine USB-Verbindung mit dem Speicherdatenträger 10 verbunden. Der Speicherdatenträger 10 umfasst den Controller 12, der anhand der Leitinformationen in dem Datenblock zwischen Kommandos für das Zusatzmodul 16 (APDU), einem normalen Schreib- oder Lese-Kommando auf das allgemein zugängliche Speicherelement 14 (Daten I/O) sowie einem Kommando für den verdeckten Speicherbereich 18 (versteckte Daten I/O) unterscheiden kann. Daten gemäß "Daten I/O" werden direkt an das Speicherelement 14 weitergeleitet und geschrieben. APDU-Kommandos werden an das Zusatzmodul 16 weitergeleitet. Ein Kommando für verdeckte Daten (verdeckte Daten I/O) wird an den verdeckten und optional verschlüsselten Speicherbereich 18 weitergeleitet.

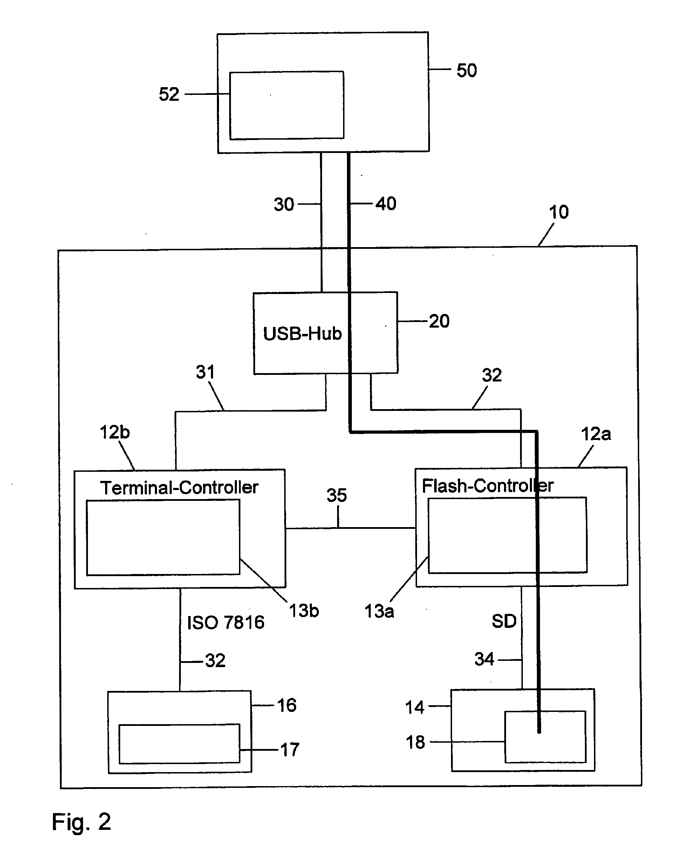

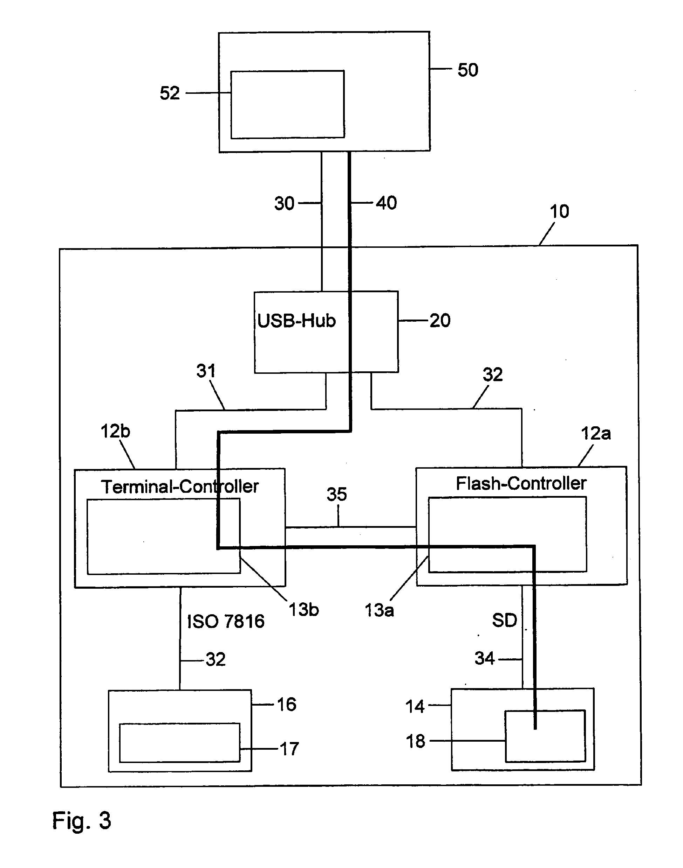

Zwei mögliche Implementierungsvarianten des erfindungsgemäßen Verfahrens sind in den Fig. 2 und 3 dargestellt. Dabei wird eine Unterscheidung zwischen einer direkten Filterung von Kommandos für den verdeckten Speicherbereich (Fig. 2) und einer weitergeleiteten Filterung von Kommandos für den verdeckten Speicherbereich (Fig. 3) unterschieden. Der Speicherdatenträger 10 umfasst in diesen Implementierungsbeispielen einen Contoller 12a (Flash-Controller) und einen Controller 12b (Terminal-Controller), welche jeweils über eine Datenverbindung 31,32 mit einem USB-Hub 20 verbunden sind. In dem Flash-Controller 12a ist eine Applikation 13a verwirklicht. In entsprechender Weise ist eine Applikation 13b in dem Terminal-Controller 12b vorgesehen. Mit dem Flash-Controller 12a steht das Speicherelement 14, das den verdeckten Speicher 18 umfasst, über eine Kommunikationsverbindung 34 gemäß dem Standard SD in Verbindung. Das Zusatzmodul 16 mit einer darin implementierten Applikation 17 ist über eine Kommunikationsverbindung 32 gemäß ISO 7816 mit dem Terminal-Controller 12b verbunden. Der USB-Hub 20 ist über eine Kommunikationsverbindung 30 mit dem bereits beschriebenen Terminal 50 verbunden.

Bei der in Fig. 2 gezeigten Implementierung einer direkten Ermittlung und Weiterleitung eines für den verdeckten Speicherbereich 18 bestimmten Kommandos überträgt das Terminal 50 über den USB-Hub 20 ein Kommando direkt an den Flash-Controller 12a. Der Flash-Controller 12a nimmt die Unterscheidung zwischen normalen Kommandos (Daten I/O) und Kommandos für den verdeckten Speicherbereich (verdeckte Daten I/O) unter Verwendung der Leitinformation mit dem weiteren vorgegebenen und den Zugriff auf den verdeckten Speicherbereich indizierenden Parameter vor. Um die Performanz des Zugriffs auf das Speicherelement 14 nicht zu verschlechtern, kann diese Vorgehensweise einer eingeschränkten Nutzung unterworfen werden. Ein Vorteil dieser Variante besteht darin, dass das schnelle Interface des Flash-Controllers genutzt werden kann. Eine Realisierung ist auch unter Umgehung des USB-Hubs 20 möglich, bei der der Flash-Controller 12a direkt an einen USB-Bus und damit direkt mit dem Terminal 50 verbunden ist. Die Übertragungsstrecke eines Datenblocks von dem Terminal 50 zu dem die Leitinformation identifizierenden Flash-Controller 12a ist mit dem Bezugszeichen 40 gekennzeichnet.

In der Ausgestaltungsvariante gemäß Fig. 3 wird ein für den verdeckten Speicherbereich 18 vorgesehenes Kommando an den Terminal-Controller 12b übertragen. Der Terminal-Controller 12b nimmt die Unterscheidung zwischen einem Zugriff auf das Speicherelement 14 oder den verdeckten Speicherbereich 18 anhand der in dem Datenblock enthaltenen Leitinformation und den weiteren, vorgegebenen und den Zugriff auf den verdeckten Speicherbereich indizierenden Parameter vor. Ein Vorteil dieser Variante besteht darin, dass das Kommando "Set Data Path" bereits spezifiziert wurde. Weiterhin können Schlüssel des Zusatzmoduls 16 verwendet werden.

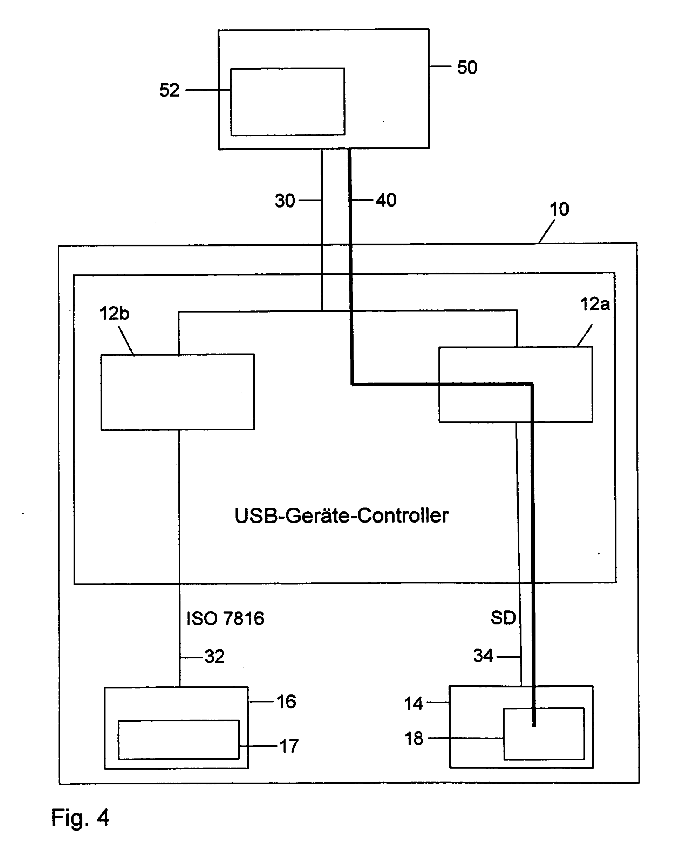

Wie in Fig. 4 veranschaulicht kann anstelle zweier separater Controller 12a, 12b auch ein einzelner USB-Geräte-Controller 12 vorgesehen sein, in dem ein Terminal-Controller 12b und ein Flash-Controller 12a als Funktionen realisiert sind, die von dem Terminal 50 über unterschiedliche USB-Endpunkte erreicht werden können. Der jeweils mit dem Terminal 50 verbundene Endpunkt wird im Rahmen des über die Kommunikationsverbindung 30 ausgeführten USB-Protokolls festgelegt. Ein USB-Hub 20 ist nicht erforderlich. Der als Funktion realisierte Flash-Controller 12a arbeitet wie der eigenständige Flash-Controller 12a nach Fig. 2. Er ermittelt für den verdeckten Speicherbereich 18 bestimmte Kommandos anhand der Leitinformation und leitet sie direkt an diesen weiter. Über weitere USB-Endpunkte können in dem USB-Geräte-Controller 12 zudem weitere Funktionen realisiert sein. Die Grundlagen für die technische Ausführung einer solchen Gestaltung finden sich z.B. in dem Buch "USB Complete, Fourth Edition", Jan Axelson, 1999-2009, Lakeview Research LLC, ISBN13 978-1-931448-08-6.

Das erfindungsgemäße Verfahren erlaubt darüber hinaus, dass Kommandos, welche nicht in einem Übertragungsprotokoll des Speicherelements an diesen übertragen werden können, in einem Datenblock in dem ersten Übertragungsprotokoll mit der Leitinformation an den tragbaren Speicherdatenträger übertragen werden. Hierzu ist die Leitinformation zur Indikation des Kommandos in dem zweiten Übertragungsprotokoll um einen zweiten, vorgegebenen Parameter ergänzt. Diese Vorgehensweise behandelt das Problem, dass beispielsweise das USB-Mass-Storage-Protokoll im Grundsatz keine Secure Digital (SD)-Kommandos erlaubt. Dieses Problem wird dadurch umgangen, dass die Leitinformation um einen zweiten Parameter ergänzt wird, um damit innerhalb des USB-Protokolls das SD-Kommando zu tunneln. Ein SD-Kommando ist damit in einem eine Leitinformation umfassenden Datenblock eingekapselt, welches dann gemäß dem USB-Mass-Storage-Protokoll an den Speicherdatenträger übertragen werden kann. Anhand des zweiten Parameters der Leitinformation kann eine Unterscheidung zwischen SD-Kommandos und normalen Kommandos, wie z.B. einem Kommando für das Zusatzmodul 16, unterschieden werden. Ein Vorteil dieser Vorgehensweise besteht darin, dass keine zusätzliche Hardware, Treiber oder administrative Rechte in dem Terminal notwendig sind.

Eine konkrete Anwendung dieser Variante ist, dass das Speicherelement 14 ein physikalisch von dem Speicherdatenträger 10 unterschiedliches Element darstellt. Der Speicherdatenträger 10 kann hierbei einen Konverter zwischen dem Speicherelement 14 und dem Terminal bilden. Während der Speicherdatenträger 10 z.B. gemäß dem USB-Mass-Storage-Protokoll angesprochen werden kann, ist eine direkte Verwendung z.B. des Übertragungsprotokolls des SD-Speicherelements nicht möglich. In diesem Fall wird die beschriebene Tunnelung von SD-Kommandos verwendet.

## Patentansprüche

1. Verfahren zum Zugriff auf einen tragbaren Speicherdatenträger (10), der einem Controller (12) zur Verwaltung eines standardisierten Speicherelements (14), das für ein Terminal (50) zugänglich ist, sowie ein Zusatzmodul (16) aufweist, wobei das standardisierte Speicherelement (14) und das Zusatzmodul (16) über unterschiedliche Kommunikationsverbindungen mit dem Controller (12) verbunden sind, wobei
- in einem ersten Übertragungsprotokoll ein Datenblock an den Speicherdatenträger (10) übertragen wird, wobei der Datenblock eine Leitinformation und Anwendungsdaten umfasst, wobei die Leitinformation einen Bezeichner enthält, der von dem Controller (12) erkannt werden kann, und
- bestimmt wird, ob ein auf dem Speicherdatenträger (10) eingegangener Datenblock eine Leitinformation enthält, wobei der Controller (12) Anwendungsdaten an das Zusatzmodul (16) leitet, wenn er in einem Datenblock eine Leitinformation mit einen Bezeichner erkannt hat und an das standardisierte Speicherelement (14), wenn er eine Leitinformation nicht erkannt hat
**dadurch gekennzeichnet, dass**
- in dem standardisierten Speicherelement (14) ein für ein Terminal (50) verdeckter Speicherbereich (18) ausgebildet wird, über den der Controller (12) dem Terminal (50) keine Information übermittelt, und
- ein Datenblock von dem Controller (12) direkt an den verdeckten Speicherbereich (18) weitergeleitet wird, wenn der Datenblock eine Leitinformation enthält und die Leitinformation neben dem darin enthaltenen Bezeichner zumindest einen weiteren, vorgegebenen und den Zugriff auf den verdeckten Speicherbereich (18) indizierenden Parameter umfasst, wobei auf dem Terminal (50) eine privilegierte Anwendung ausgeführt wird, die alleine auf den verdeckten Speicherbereich (18) zugreifen kann.

2. Verfahren nach einem der vorherigen Ansprüche, **dadurch gekennzeichnet, dass** ein Zugriff der privilegierten Anwendung auf den verdeckten Speicherbereich (18) ohne administrative Rechte für den tragbaren Speicherdatenträger (10) erfolgt.

3. Verfahren nach einem der vorherigen Ansprüche, **dadurch gekennzeichnet, dass** das Speicherelement (14) des tragbaren Speicherdatenträgers (10) eine tatsächliche Gesamtgröße aufweist, wobei von dem tragbaren Speicherdatenträger (10) an das Terminal (50) ein die Größe des Speicherelements repräsentierender Wert als Gesamtgröße übertragen wird, der sich aus der Differenz der tatsächlichen Gesamtgröße und der Größe des verdeckten Speicherbereichs ergibt.

4. Verfahren nach einem der vorherigen Ansprüche, **dadurch gekennzeichnet, dass** das Terminal mit einer Programmierschnittstelle versehen ist, welche bei einer Anfrage der privilegierten Applikation auf den versteckten Speicherbereich (18) die Anfrage in einen Datenblock umsetzt und der Leitinformation den weiteren, vorgegebenen Parameter hinzufügt.

5. Verfahren nach einem der vorherigen Ansprüche, **dadurch gekennzeichnet, dass** bei einem Zugriff auf den verdeckten Speicherbereich (18) ein Dateiverzeichnis des verdeckten Speicherbereichs (18) und optional die darin enthaltenen Daten an das Terminal (50) übertragen werden.

6. Verfahren nach einem der vorherigen Ansprüche, **dadurch gekennzeichnet, dass** die in dem verdeckten Speicherbereich (18) gespeicherten Daten verschlüsselt gespeichert werden.

7. Verfahren nach einem der vorherigen Ansprüche, **dadurch gekennzeichnet, dass** das erste Übertragungsprotokoll auf das Speicherelement (14) abgestimmt ist.

8. Verfahren nach einem der Ansprüche 1 bis 6, **dadurch gekennzeichnet, dass** Kommandos, welche nicht in einem zweiten Übertragungsprotokoll des Speicherelements (14) an diesen übertragen werden können, in einem Datenblock in dem ersten Übertragungsprotokoll mit der Leitinformation an den tragbaren Speicherdatenträger übertragen werden.

9. Verfahren nach Anspruch 8, **dadurch gekennzeichnet, dass** die Leitinformation zur Indikation des Kommandos in dem zweiten Übertragungsprotokoll um einen zweiten, vorgegebenen Parameter ergänzt ist.

10. Tragbarer Speicherdatenträger (10) mit einem Controller (12) zur Verwaltung eines standardisierten Speicherelements (14), das für ein Terminal (50) zugänglich ist, sowie ein Zusatzmodul (16) aufweist, wobei das standardisierte Speicherelement (14) und das Zusatzmodul (16) über unterschiedliche Kommunikationsverbindungen mit dem Controller (12) verbunden sind, der dazu ausgebildet ist,
- in einem ersten Übertragungsprotokoll einen Datenblock von einem Terminal (50) zu empfangen, wobei der Datenblock eine Leitinformation und Anwendungsdaten umfasst, und wobei die Leitinformation einen von dem Controller (12) erkennbaren Bezeichner enthält, und
- zu bestimmen, ob ein auf dem Speicherdatenträger (10) eingegangener Datenblock eine Leitinformation enthält, wobei der Controller (12) dazu ausgebildet ist Anwendungsdaten an das Zusatzmodul (16) zu leiten, wenn er in einem Datenblock eine Leitinformation mit einen Bezeichner erkannt hat, und an das standardisierte Speicherelement (14), wenn er eine Leitinformation nicht erkannt hat,
**dadurch gekennzeichnet, dass** der Speicherdatenträger (10)
- in dem standardisierten Speicherelement (14) ein für ein Terminal (50) verdeckter Speicherbereich (18) ausgebildet ist, über den der Controller (12) dem Terminal (50) keine Information übermittelt,
und der Speicherdatenträger (10) weiter dazu ausgebildet ist,
- einen Datenblock von dem Controller (12) direkt an den verdeckten Speicherbereich (18) weiterzuleiten, wenn der Datenblock eine Leitinformation enthält und die Leitinformation neben dem darin enthaltenen Bezeichner zumindest einen weiteren, vorgegebenen Parameter umfasst, welcher den Zugriff auf den verdeckten Speicherbereich (18) indiziert.

11. Verwendung eines tragbaren Speicherdatenträgers (10) gemäß Anspruch 10 zur Durchführung des Verfahrens nach einem der Ansprüche 1 bis 9.

## Claims

1. A method for accessing a portable memory data carrier (10) having a controller (12) for administrating a standardized memory element (14) that is accessible for a terminal (50), and an additional module (16), wherein the standardized memory element (14) and the additional module (16) are connected to the controller (12) via different communication connections, wherein
- in a first transmission protocol a data block is transmitted to the memory data carrier (10), wherein the data block comprises a routing information item and application data, the routing information containing an identifier that is recognizable by the controller (12), and
- it is determined whether a data block received by the memory data carrier (10) contains a routing information item, wherein the controller (12) routes application data to the additional module (16) when it has recognized a routing information item with an identifier in a data block, and to the standardized memory element (14) when it has recognized no routing information item,
**characterized in that**
- in the standardized memory element (14) a memory area (18) is formed that is hidden for a terminal (50), about which the controller (12) transfers no information to the terminal (50), and
- a data block is forwarded directly from the controller (12) to the hidden memory area (18) when the data block contains a routing information item and the routing information item contains, besides the contained identifier, at least one further, predetermined parameter indicating the access to the hidden memory area (18), wherein on the terminal (50) a privileged application is executed which can exclusively access the hidden memory area (18).

2. The method according to any of the preceding claims, **characterized in that** an access of the privileged application to the hidden memory area (18) is effected without administrative rights for the portable memory data carrier (10).

3. The method according to any of the preceding claims, **characterized in that** the memory element (14) of the portable memory data carrier (10) has an actual total size, there being transmitted as the total size from the portable memory data carrier (10) to the terminal (50) a value representing the size of the memory element that results from the difference between the actual total size and the size of the hidden memory area.

4. The method according to any of the preceding claims, **characterized in that** the terminal is equipped with a programming interface which, upon a request of the privileged application to the disguised memory area (18), converts the request to a data block and adds the further, predetermined parameter to the routing information.

5. The method according to any of the preceding claims, **characterized in that** upon an access to the hidden memory area (18) there are transmitted to the terminal (50) a file directory of the hidden memory area (18) and optionally the data contained therein.

6. The method according to any of the preceding claims, **characterized in that** the data stored in the hidden memory area (18) are stored in encrypted form.

7. The method according to any of the preceding claims, **characterized in that** the first transmission protocol is coordinated with the memory element (14).

8. The method according to any of the claims 1 to 6, **characterized in that** commands that cannot be transmitted to the memory element (14) in a second transmission protocol thereof are transmitted to the portable memory data carrier in a data block in the first transmission protocol with the routing information.

9. The method according to claim 8, **characterized in that** the routing information is supplemented, for indicating the command in the second transmission protocol, by a second, predetermined parameter.

10. A portable memory data carrier (10) with a controller (12) for administrating a standardized memory element (14) that is accessible for a terminal (50), and an additional module (16), wherein the standardized memory element (14) and the additional module (16) are connected to the controller (12) via different communication connections, being configured to
- receive a data block from a terminal (50) in a first transmission protocol, wherein the data block comprises a routing information item and application data, and wherein the routing information item contains an identifier which is recognizable by the controller (12), and to
- determine whether a data block received by the memory data carrier (10) contains a routing information item, wherein the controller (12) is configured to route application data to the additional module (16) when it has recognized a routing information item with an identifier in a data block, and to the standardized memory element (14) when it has recognized no routing information item,
**characterized in that** the memory data carrier (10)
- in the standardized memory element (14) a memory area (18) is formed that is hidden for the terminal (50), about which the controller (12) transfers no information to the terminal (50),
and the memory data carrier (10) is further configured to
- forward a data block from the controller (12) directly to the hidden memory area (18) when the data block contains a routing information item and the routing information item comprises, besides the contained identifier, at least one further, predetermined parameter indicating the access to the hidden memory area (18).

11. The use of a portable memory data carrier (10) according to claim 10 for carrying out the method according to any of the claims 1 to 9.

## Revendications

1. Procédé d'accès à un support de données mémoire (10) portable qui comporte un contrôleur (12) destiné à la gestion d'un élément de mémoire (14) standardisé accessible à un terminal (50) ainsi qu'un module supplémentaire (16), l'élément de mémoire (14) standardisé et le module supplémentaire (16) étant reliés au contrôleur (12) par différentes liaisons de communication, cependant que
- dans un premier protocole de transmission, un bloc de données est transmis au support de données mémoire (10), le bloc de données comprenant une information de guidage et des données d'application, l'information de guidage contenant un identificateur pouvant être reconnu par le contrôleur (12), et
- il est déterminé si un bloc de données parvenu sur le support de données mémoire (10) contient une information de guidage, le contrôleur (12) guidant des données d'application vers le module supplémentaire (16) s'il a reconnu dans un bloc de données une information de guidage ayant un identificateur, et les guidant vers l'élément de mémoire (14) standardisé s'il n'a pas reconnu une information de guidage
**caractérisé en ce que**
- dans l'élément de mémoire (14) standardisé, une zone mémoire (18) cachée à un terminal (50) est réalisée, sur laquelle le contrôleur (12) ne transmet pas d'information au terminal (50), et
- un bloc de données est transféré par le contrôleur (12) directement à la zone mémoire (18) cachée si le bloc de données contient une information de guidage et que l'information de guidage comprend, outre l'identificateur y étant contenu, au moins un autre paramètre préétabli indiquant l'accès à la zone mémoire (18) cachée, cependant que, sur le terminal (50), une application privilégiée pouvant seule accéder à la zone mémoire (18) cachée est exécutée.

2. Procédé selon une des revendications précédentes, **caractérisé en ce qu'**un accès de l'application privilégiée à la zone mémoire (18) cachée a lieu sans droits administratifs pour le support de données mémoire (10) portable.

3. Procédé selon une des revendications précédentes, **caractérisé en ce qu'**un élément de mémoire (14) du support de données mémoire (10) portable a une taille totale effective, cependant que, du support de données mémoire (10) portable au terminal (50), une valeur représentant la taille de l'élément de mémoire est transmise en tant que taille totale, ladite valeur découlant de la différence entre la taille totale effective et taille de la zone mémoire cachée.

4. Procédé selon une des revendications précédentes, **caractérisé en ce que** le terminal est doté d'une interface de programmation qui, en cas d'une demande de l'application privilégiée visant la zone mémoire (18) cachée, convertit la demande est en un bloc de données et ajoute à l'information de guidage l'autre paramètre préétabli.

5. Procédé selon une des revendications précédentes, **caractérisé en ce que**, en cas d'un accès à la zone mémoire (18) cachée, un répertoire de fichiers de la zone mémoire (18) cachée, et en option les données y étant contenues, sont transmis au terminal (50).

6. Procédé selon une des revendications précédentes, **caractérisé en ce que** les données contenues dans la zone mémoire (18) cachée sont mémorisées sous forme cryptée.

7. Procédé selon une des revendications précédentes, **caractérisé en ce que** le premier protocole de transmission est accordé à l'élément de mémoire (14).

8. Procédé selon une des revendications de 1 à 6, **caractérisé en ce que** des ordres qui ne peuvent pas, dans un deuxième protocole de transmission de l'élément de mémoire (14), être transmis à ce dernier, sont transmis dans un bloc de données, dans le premier protocole de transmission contenant l'information de guidage, au support de données mémoire portable.

9. Procédé selon la revendication 8, **caractérisé en ce que** l'information de guidage est, pour l'indication de l'ordre, complétée dans le deuxième protocole de transmission par un deuxième paramètre préétabli.

10. Support de données mémoire (10) portable ayant un contrôleur (12) destiné à la gestion d'un élément de mémoire (14) standardisé accessible à un terminal (50) ainsi qu'un module supplémentaire (16), l'élément de mémoire (14) standardisé et le module supplémentaire (16) étant reliés au contrôleur (12) par différentes liaisons de communication, qui est conçu pour
- dans un premier protocole de transmission, recevoir un bloc de données de la part d'un terminal (50), le bloc de données comprenant une information de guidage et des données d'application, et l'information de guidage contenant un identificateur pouvant être reconnu par le contrôleur (12), et
- déterminer si un bloc de données parvenu sur le support de données mémoire (10) contient une information de guidage, le contrôleur (12) étant conçu pour guider des données d'application vers le module supplémentaire (16) s'il a reconnu dans un bloc de données une information de guidage ayant un identificateur, et pour les guider vers l'élément de mémoire (14) standardisé s'il n'a pas reconnu une information de guidage
**caractérisé en ce que** le support de données mémoire (10)
- dans l'élément de mémoire (14) standardisé, une zone mémoire (18) cachée à un terminal (50) est réalisée, sur laquelle le contrôleur (12) ne transmet pas d'information au terminal (50),
et le support de données mémoire (10) étant en outre conçu de sorte que
- un bloc de données est transféré par le contrôleur (12) directement à la zone mémoire (18) cachée si le bloc de données contient une information de guidage et que l'information de guidage comprend, outre l'identificateur y étant contenu, au moins un autre paramètre préétabli indiquant l'accès à la zone mémoire (18) cachée.

11. Utilisation d'un support de données mémoire (10) portable selon la revendication 10 pour l'exécution du procédé selon une des revendications de 1 à 9.
